# FASCICULE DE BREVET EUROPEEN

(11) **EP 1 232 932 B1**
(45) Date de publication et mention de la délivrance du brevet: **19.10.2005**
(21) Numéro de dépôt: 02290339.7
(22) Date de dépôt: 12.02.2002
(51) Int. Cl.: B62D 25/08, B60Q 1/04

(54) **Ensemble de bloc avant de véhicule automobile comportant un dispositif amélioré de fixation des composants, et véhicule équipé d'un tel ensemble**
Fronteinheit für ein Kraftfahrzeug, und verbesserte Befestigung für Anbauteile, Kraftfahrzeug ausgerüstet mit einer derartigen Befestigung
Front module for vehicle with improved fixation device for componants, and vehicle equipped with such a device

(30) Priorité: 15.02.2001 FR 0102095
(43) Date de publication de la demande: 21.08.2002
(73) Titulaire: Faurecia Bloc Avant, 92000 Nanterre (FR)
(72) Inventeur: Hoffner, Jacques, 68550 Saint Amarin (FR); Blondeau, Jean-Philippe, 25200 Montbelliard (FR)
(74) Mandataire: Jacobson, Claude

(56) Documents cités:
- DE-A- 19 946 995

## Description

La présente invention se rapporte à un ensemble de bloc avant de véhicule automobile comportant une face avant qui présente une partie centrale et deux parties latérales, un pare-chocs, une peau de pare-chocs formant carénage dudit pare-chocs, deux poutres s'étendant chacune de la partie centrale à laquelle elle est fixée vers une partie latérale respective, et formant des organes de support de ladite peau de pare-chocs, et deux blocs optiques, chacun étant supporté par une partie latérale respective et présentant une partie périphérique latérale adaptée pour coopérer avec un évidement complémentaire d'une partie avant d'aile respective (voir DE-A-19 946 995).

Une difficulté majeure rencontrée par les constructeurs automobiles et/ou les fabricants de bloc avant consiste à positionner de façon précise les blocs optiques par rapport aux autres éléments d'aspect constitués par les ailes et la peau de pare-chocs. Cet ajustage est important du fait qu'un défaut de continuité de surface de la partie visible du bloc optique, c'est-à-dire de la glace, de l'aile correspondante, et de la peau de pare-chocs, dégrade sensiblement la qualité esthétique du véhicule. En outre, un réglage précis de la position du bloc optique par rapport à l'aile et à la peau de pare-chocs est difficile à maintenir entre l'opération de montage des blocs optiques sur la face avant et l'opération d'assemblage du bloc avant équipé sur la caisse du véhicule.

Ces difficultés ont été accrues par la généralisation des optiques monoblocs intégrant la fonction de clignotant, alors qu'auparavant, la partie de clignotant était ajustable par rapport à la partie principale du boîtier de projecteur, de sorte qu'il était relativement aisé de compenser les tolérances de positionnement relatif des différents composants du bloc avant.

Actuellement, dans la cas d'optiques monoblocs intégrant la fonction de clignotant, on fixe le bloc optique généralement en quatre points sur la face avant qui constitue une pièce rigide. Après assemblage du bloc optique, on monte sur celui-ci sur la caisse du véhicule et on lui fixe les extrémités avant des ailes de carrosserie. Dans une opération suivante, le constructeur automobile réalise le réglage de la position du bloc optique par rapport à l'aile, en agissant sur deux points de fixation du bloc optique sur la face avant.

L'inconvénient majeur de ce mode opératoire, qui est imposé par la constitution de l'ensemble de bloc avant, réside dans cette opération de reprise en fin de montage, qui consiste à régler la position du bloc optique.

En outre, ce réglage délicat doit être effectué pour tous les véhicules, compte-tenu des tolérances de fabrication et d'assemblage des différents éléments mis en jeu. Ces éléments étant également susceptibles de déformation plus ou moins importante, les affleurements de surface obtenus par ces réglages ne sont pas stables dans le temps et peuvent nécessiter des réglages supplémentaires.

Un but principal de l'invention est de remédier à ces inconvénients et de proposer un ensemble de bloc avant de véhicule automobile dont l'agencement des composants permette un positionnement automatique et permanent des contours visibles des blocs optiques, par rapport à l'extrémité d'aile correspondante et à la peau de pare-chocs, en même temps qu'un positionnement relatif précis, dans les mêmes conditions, des extrémités d'aile et de la peau de pare-chocs.

A cet effet, suivant l'invention , chaque bloc optique et la partie avant d'aile respective sont fixés rigidement à la poutre correspondante en un même point de fixation de référence, ladite poutre étant douée d'une élasticité sensiblement supérieure à celle de la face avant, de sorte qu'elle est susceptible de se déformer élastiquement en fonction de mouvements relatifs d'ajustement de la peau de pare-chocs, de l'aile et/ou du bloc optique.

Suivant d'autres caractéristiques de l'invention :
- la peau de pare-chocs est fixée rigidement à chaque poutre en au moins un point constitué par ledit point de fixation de référence ;
- chaque poutre comporte une gouttière transversale recevant un bord latéral complémentaire de la peau de pare-chocs, de sorte que ledit bord peut coulisser dans la gouttière en fonction de mouvements relatifs d'ajustement de la peau de pare-chocs, de l'aile et/ou du bloc optique ;
- chaque poutre présente une extrémité fixée rigidement à la partie centrale de face avant, l'autre extrémité étant libre, de façon que la poutre soit susceptible de débattement par rapport à l'extrémité de fixation rigide ;
- chaque bloc optique est fixé rigidement à l'extrémité de fixation rigide de la poutre, en un point de fixation, définissant un point de fixation simple ;
- chaque bloc optique comporte un boîtier et une glace solidaires, et le point de fixation simple est obtenu par un organe de fixation solidaire du boîtier et un organe de fixation complémentaire solidaire de l'extrémité de fixation rigide de la poutre ;
- la poutre comporte un organe élastique d'accrochage, complémentaire d'un organe d'accrochage solidaire de la partie avant d'aile respective de façon à exercer un effort de précontrainte sur l'aile, en un point situé à distance du point de fixation de référence, ledit effort étant dirigé sensiblement d'avant en arrière suivant la direction générale de l'aile ;
- chaque bloc optique et la partie avant d'aile respective sont fixés rigidement à la face avant en un même point de fixation, définissant un point de fixation double ;
- ledit point de fixation double est obtenu par un organe de fixation solidaire du boîtier et des organes de fixation complémentaires de la partie avant d'aile respective et de la face avant ;
- chaque bloc optique comporte au moins un organe d'indexage adapté pour coopérer avec un organe d'indexage complémentaire solidaire de la partie avant d'aile correspondante ;
- ledit au moins un organe d'indexage est un pion tandis que l'organe d'indexage complémentaire est une gorge formée dans la partie avant d'aile correspondante ;
- chaque bloc optique comporte deux tels organes d'indexage ;
- un premier organe d'indexage et l'organe complémentaire sont de forme adaptée pour autoriser un jeu relatif entre le bloc optique et l'aile suivant un axe sensiblement vertical ;
- un deuxième organe d'indexage et l'organe complémentaire sont de forme adaptée pour autoriser un jeu relatif entre le bloc optique et l'aile correspondante suivant un axe dirigé sensiblement suivant la direction générale de l'aile ;
- au moins un organe d'indexage est solidaire de la glace ; et
- le point de fixation de référence est obtenu par un organe de fixation solidaire de la glace et des organes de fixation complémentaires prévus sur la partie avant d'aile et la poutre respectives.

L'invention vise également un véhicule automobile équipé d'un ensemble de bloc avant tel que défini précédemment.

L'invention sera mieux comprise à l'aide de la description qui va suivre donnée uniquement à titre d'exemple et faite en se référant aux dessins annexés, sur lesquels :
- la Figure 1 est une vue schématique en perspective d'un ensemble de bloc avant suivant l'invention, sur lequel est fixée une partie d'extrémité avant d'une aile de carrosserie ;
- la Figure 2 est une vue en perspective schématique, à plus grande échelle, d'une partie latérale de l'ensemble de bloc avant représenté à la Figure 1, les composants étant disjoints ;
- la Figure 3 est une vue analogue sur laquelle on a représenté l'extrémité avant d'une aile de carrosserie, mais pas la face avant ; et
- la Figure 4 est une vue de détail schématique de section du point de fixation de référence reliant le bloc optique, l'extrémité avant de l'aile, la peau de pare-chocs, et la poutre.

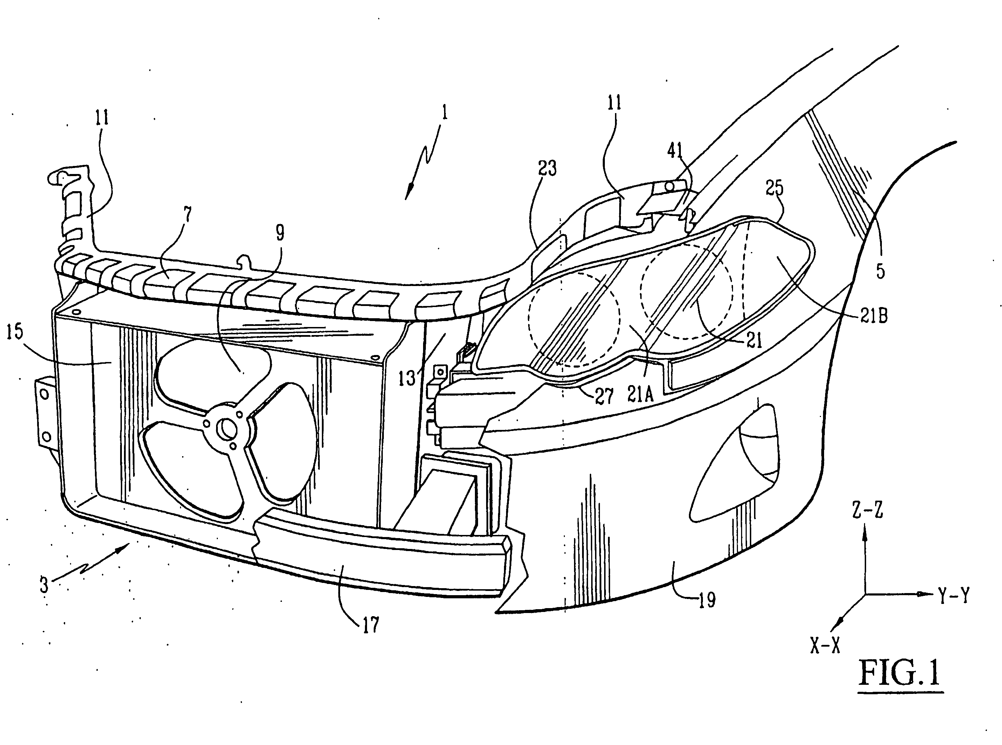

Sur la Figure 1, on a représenté une partie avant 1 d'un véhicule automobile, constituée par un ensemble de bloc avant 3 et d'une extrémité avant 5 d'une aile de carrosserie.

Sur cette Figure comme dans la suite de la description qui sera faite en référence aux autres Figures, on définit une orientation suivant trois axes X-X, Y-Y et Z-Z qui correspondent à l'orientation usuelle du véhicule, à savoir respectivement à l'axe longitudinal orienté dans la direction de marche avant X-X, à l'axe transversal Y-Y, et à l'axe vertical Z-Z orienté de bas en haut. Tous les termes utilisés dans la suite de la description pouvant indiquer un sens ou un positionnement doivent être compris en référence à ce système d'axe.

L'ensemble de bloc avant 3, ou plus simplement bloc avant, comporte une structure essentiellement rigide constituée par une face avant 7, laquelle présente une partie centrale 9 et deux parties latérales 11, la partie centrale 9 étant délimitée latéralement par deux montants verticaux 13 symétriques par rapport au plan longitudinal de symétrie du véhicule X-Z. Entre ces montants 13 est ménagé un évidement recevant notamment un échangeur de chaleur 15. Un pare-chocs 17 formé essentiellement d'une barre transversale en saillie de la face avant 7, dans une partie inférieure de celle-ci, est fixée à chacun des montants verticaux 13. Une peau de pare-chocs 19 réalisée d'une pièce en matériau plastique ou en tôle est disposée sur toute la largeur de la face avant 7, de façon à constituer un carénage du pare-chocs 17, en dépassant latéralement des parties latérales de face avant 11, et en s'appliquant sous un bord de l'extrémité avant d'aile 5, en coïncidence avec celui-ci. Un bloc optique 21 est monté dans chaque partie latérale 11 de face avant, de façon à être intégré dans des formes complémentaires du bord supérieur 23 de la face avant, d'une échancrure ou évidement 25 de l'extrémité avant d'aile 5, et d'un bord supérieur 27 de la peau de pare-chocs 19.

Il est évident que les composants qui viennent d'être décrits présentent généralement une symétrie par rapport au plan longitudinal de symétrie du véhicule X-Z, de sorte que l'on ne décrira qu'une partie du bloc avant intéressant l'invention, située à l'avant gauche du véhicule, étant entendu que des dispositions identiques sont prévues du côté avant droit.

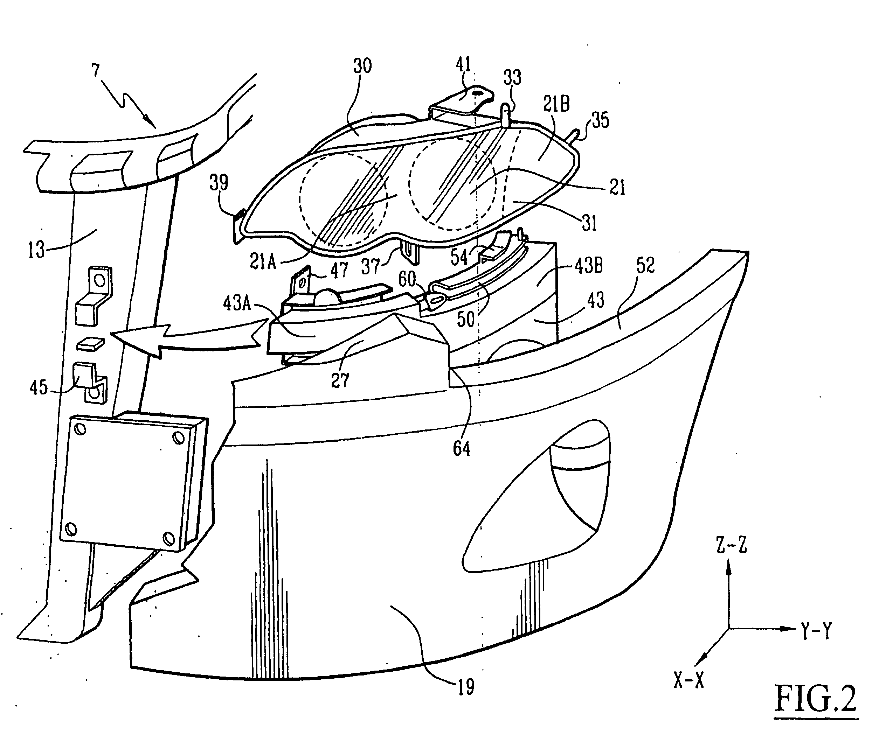

En référence à la Figure 2, on va maintenant décrire plus en détail le mode de fixation du bloc optique 21 et de la peau de pare-chocs 19 sur la face avant 7.

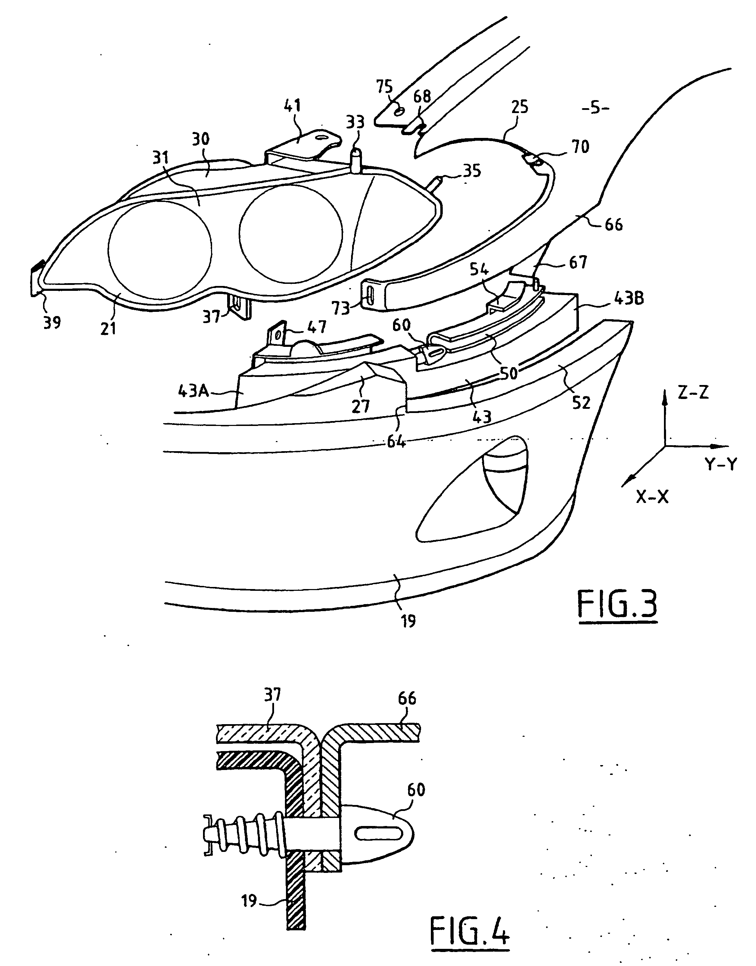

Le bloc optique 21 est un bloc unique comprenant une partie de projecteur 21A et une partie de clignotant 21B, solidaires sans jeu relatif. Il comprend essentiellement un boîtier 30, à l'intérieur duquel sont montées des ampoules, et destiné à s'encastrer dans la partie latérale 11 de face avant correspondante, et une glace 31 destinée à assurer une continuité d'aspect entre le bord supérieur 27 de la peau de pare-chocs 19, l'échancrure 25 et le bord supérieur 23 de la face avant. Deux pions de centrage 33, 35 font saillie du bord périphérique de la glace 31 et sont prévus pour coopérer avec des gorges correspondantes de l'extrémité avant 5 de l'aile, gorges qui seront décrites en référence à la Figure 3. Une première patte de fixation 37 fait saillie du bord périphérique inférieur de la glace 31. Une deuxième patte de fixation 39 et une troisième patte de fixation 41, venues de matière du boîtier 30, sont formées respectivement sur une face latérale du boîtier, du côté de la partie centrale de face avant 9, et sur une face supérieure du boîtier 30.

Le bloc avant 3 comporte par ailleurs une poutre galbée 43 s'étendant sensiblement dans la direction de la peau de pare-chocs 19 depuis le montant 13 jusqu'à une extrémité latérale de la partie latérale 11 correspondante de face avant. Cette poutre galbée 43 est fixée rigidement par l'une de ses extrémités 43A au montant vertical 13 de la face avant 7, dans une guide complémentaire 45 du montant 13, par des moyens de fixation classiques non représentés, par exemple des rivets ou des vis. Au voisinage de la région de fixation 43A est formée, en saillie de cette extrémité de la poutre 43, une patte de fixation 47 venue de matière avec la poutre 43. L'autre extrémité de la poutre galbée 43 est une extrémité libre 43B, la poutre galbée 43 étant douée d'une certaine élasticité de façon à pouvoir se déformer par rapport à l'extrémité de fixation 43A. L'élasticité de la poutre galbée 43 est très supérieure à l'élasticité du montant 13 et plus généralement de la face avant 7, et permet de compenser les jeux relatifs d'ajustement de la peau de pare-chocs 19, du bloc optique 21, et/ou de l'aile 5.

La poutre galbée 43 présente, sur une face supérieure située sensiblement au droit de la partie latérale 11 de la face avant 7 et sous le bloc optique 21, une gouttière 50 orientée suivant la direction générale de la poutre 43. Cette gouttière 50 reçoit un bord supérieur 52 de la peau de pare-chocs 19, de façon que celui-ci puisse coulisser légèrement, en fonction de mouvements relatifs d'ajustement de la peau de pare-chocs 19, de l'aile 5 et/ou du bloc optique 21, suivant la direction générale de la poutre 43. La gouttière 50 est surmontée d'un organe élastique d'accrochage 54, constitué d'une gouttière de plus petite dimension que la gouttière 50 et présentant un bord supérieur conformé en languette relevée vers le haut. L'organe élastique d'accrochage 54 reçoit une languette complémentaire, qui sera vue sur la Figure 3, formant organe d'accrochage complémentaire solidaire de la partie avant 5 de l'aile.

On connaît dans l'état de la technique des poutres de forme analogue fixées rigidement sur un montant vertical de la face avant, et supportant la peau de pare-chocs. Par contre, les poutres de l'état de 1a technique sont prévues rigides pour réduire les jeux de la peau de pare-chocs par rapport à la face avant. De telles poutres de l'état de la technique sont en outre dénuées de points de fixation avec le projecteur.

Conformément à l'invention, la première patte de fixation 37 est utilisée pour créer un point de fixation rigide entre la poutre 43 et le bloc-optique 21, plus précisément la glace 31. Ce point de fixation est obtenu, dans l'exemple représenté, par une fixation connue de type vis « quart-de-tour » 60, qui ne sera donc pas décrite ici.

La deuxième patte de fixation 39 est prévue pour coÏncider avec la patte 47 en saillie de la poutre 43, et être assemblée avec celle-ci de façon rigide, par exemple par vissage ou rivetage.

La troisième patte de fixation 41 est liée de la même façon à une partie de bord supérieur 23 de la partie latérale 11 de face avant, comme cela a été représenté schématiquement sur la Figure 1.

On se réfère maintenant à la Figure 3, sur laquelle la poutre galbée 43 est représentée fixée sur le montant 13.

La peau de pare-chocs 19 présente un décrochement 64 formant paroi verticale de jonction entre le bord supérieur 27 coopérant avec le bord inférieur du bloc optique 21, et le bord supérieur 52 s'insérant dans la gouttière 50. La paroi verticale 64 est percée et configurée de façon à s'assembler avec la patte de fixation 37 du bloc optique 21, sur la vis quart-de-tour 60 de fixation à la poutre 43.

L'extrémité avant 5 de l'aile présente une bande inférieure 66 définie par l'échancrure 25, cette bande inférieure 66 étant destinée à coopérer par son bord inférieur avec le bord supérieur 52 de la peau de pare-chocs 19, et par son bord supérieur avec le bloc optique 21.

En saillie d'un bord inférieur de la bande 66, est formée une languette 67 constituant l'organe élastique d'accrochage complémentaire, et portant sur le rebord relevé de celui-ci de façon à créer un effort de pré-contrainte sur l'aile 5, en un point situé à distance du point de fixation de référence 60. L'effort de pré-contrainte est dirigé sensiblement d'avant en arrière suivant la direction générale de l'aile 5.

En extrémité d'une face quasi-horizontale de l'extrémité avant 5, est formée une première gorge 68 destinée à recevoir le premier pion 33 du bloc optique 21. Dans le fond de l'échancrure 25, une deuxième gorge 70 est formée de façon complémentaire au deuxième pion 35 du bloc optique 21.

On obtient ainsi deux paires 33, 68, 35,70 d'organes d'indexage du bloc otique 21 sur l'aile 5.

La première paire d'organes d'indexage 33,68 autorise un déplacement d'ajustement relatif entre le bloc optique 21 et l'aile 5, suivant un axe sensiblement vertical, tandis que la deuxième paire d'organes d'indexage 35, 70 autorise un déplacement relatif sensiblement suivant la direction de l'aile 5.

En extrémité avant de la bande inférieure 66 de l'extrémité avant d'aile 5, est formée une lumière 73 sur une partie méplate, destinée à assurer une liaison ponctuelle fixe avec la poutre 43 par l'intermédiaire de la vis quart-de-tour 60.

Comme on le voit, on réalise en un point intermédiaire de la poutre 43 un point de fixation de référence liant ponctuellement et rigidement par la vis quart-de-tour 60, à la fois le bloc optique 21 par sa première patte de fixation 37, la peau de pare-chocs 19 par son décrochement 64, et l'extrémité avant de l'aile 5 par l'extrémité avant de la bande inférieure 66 portant la lumière 73.

A proximité de la première gorge 68 de l'extrémité avant de l'aile 5 est formé un trou 75, coïncidant avec le point de fixation de la troisième patte de fixation 41 du bloc optique 21 sur la partie latérale 11 de face avant.

On obtient ainsi un point de fixation double, par un moyen classique de rivetage ou de vissage par exemple, sur la partie latérale de face avant 11, à la fois du bloc optique 21 par sa troisième patte de fixation 41, et de l'extrémité avant d'aile 5 par le trou 75.

La liaison rigide du bloc optique 21 sur le montant vertical 13 par l'intermédiaire de la deuxième patte de fixation 39, définit, elle, un point de fixation simple.

Sur la Figure 4, on a représenté de façon schématique le point de fixation de référence réalisé par vissage, au moyen de la vis quart-de-tour 60, d'une partie 64 de peau de pare-chocs 19, d'une partie 37 de bloc optique 21, et d'une partie 66 d'aile, ces parties étant superposées et serrées au moyen de la vis 60.

Le procédé de montage des différents composants de l'ensemble de bloc avant 3 et d'assemblage du bloc avant 3 et des parties d'ailes 5, est réalisé suivant une séquence d'opérations comprenant les opérations suivantes :
- on fixe la poutre 43 sur le montant 13, en réglant la position de la poutre dans son guide 45 associé, au moyen par exemple de gabarits de montage qui ne seront pas décrits ici ;
- on fixe la peau de pare-chocs 19 sur la face avant 7, et on insère le bord supérieur 52 dans la gouttière 50, en reliant le décrochement 64 à la poutre 43 par l'intermédiaire de la vis quart de tour 60, et en introduisant la languette 67 dans l'organe élastique d'accrochage 54 ;
- on fixe le bloc optique 21 sur la poutre 43, d'abord au niveau du point de référence matérialisé par la vis quart-de-tour 60 et la première patte 37, puis au niveau du point de fixation simple matérialisé par la patte de fixation 39 et la patte correspondante 47;
- on assemble ensuite le bloc avant 3 ainsi obtenu sur la caisse du véhicule ;
- on approche enfin l'aile 5 du bloc avant 3 pour la solidariser avec celui-ci, d'abord au niveau du point de fixation de référence, c'est-à-dire en associant la lumière 73 à la vis quart-de-tour 60, puis en fixant l'aile 5 au bloc optique 21, en associant la troisième patte 41 du bloc optique 21 au trou 75, et en associant successivement les paires d'organes d'indexage 33, 68 et 35, 70.

Grâce à l'invention, on réalise un assemblage hyperstatique entre trois composants, à savoir le bloc optique 21, la peau de pare-chocs 19, et l'aile 5, susceptible de jeux relatifs durant leur assemblage, propres à compenser les tolérances de fabrication de ces pièces. De ce fait, on obtient un positionnement relatif précis de ces pièces, en respectant constamment l'affleurement des bords et surfaces de jonction visibles depuis l'extérieur du véhicule.

L'invention permet par conséquent d'obtenir une qualité esthétique optimale de la partie avant du véhicule, constante dans le temps, et ce sans opération de reprise et d'ajustement supplémentaires, postérieures à l'assemblage du véhicule.

En outre, l'élasticité des parties latérales du bloc avant 3 apportée par l'élasticité de la poutre 43 permet, durant le montage du bloc avant sur la caisse du véhicule, une déformation légère de ces parties latérales par resserrement vers l'intérieur. Cela facilite l'utilisation des gabarits de montage qui permettent de fixer avec précision, et de façon automatisée, le bloc avant sur la caisse du véhicule.

Un autre avantage de l'invention réside dans le fait d'indexer, non seulement la position du bloc optique 21 par rapport à l'échancrure 25 de l'aile 5, mais plus précisément la glace 31 du bloc optique 21 par rapport à l'échancrure 25, la glace constituant elle-même un élément d'aspect directement visible de l'extérieur du véhicule. Il en va de même de la fixation sur la poutre 43, obtenue par un organe solidaire de la glace 31.

## Revendications

1. Ensemble de bloc avant de véhicule automobile comportant une face avant (7) qui présente une partie centrale (9) et deux parties latérales (11), un pare-chocs (17), une peau de pare-chocs (19) formant carénage dudit pare-chocs, deux poutres (43) s'étendant chacune de la partie centrale (9) à laquelle elle est fixée vers une partie latérale (11) respective, et formant des organes de support de ladite peau de pare-chocs (19), et deux blocs optiques (21), chacun étant supporté par une partie latérale (11) respective et présentant une partie périphérique latérale adaptée pour coopérer avec un évidement complémentaire (25) d'une partie avant d'aile (5) respective, **caractérisé en ce que** chaque bloc optique (21) et la partie avant d'aile (5) respective sont fixés rigidement à la poutre (43) correspondante en un même point de fixation de référence (60), ladite poutre. (43) étant douée d'une élasticité sensiblement supérieure à celle de la face avant (7), de sorte qu'elle est susceptible de se déformer élastiquement en fonction de mouvements relatifs d'ajustement de la peau de pare-chocs (19), de l'aile (5) et/ou du bloc optique (21).

2. Ensemble de bloc avant suivant la revendication 1, **caractérisé en ce que** la peau de pare-chocs (19) est fixée rigidement à chaque poutre (43) en au moins un point constitué par ledit point de fixation de référence (60).

3. Ensemble de bloc avant suivant la revendication 1 ou 2, **caractérisé en ce que** chaque poutre (43) comporte une gouttière transversale (50) recevant un bord latéral complémentaire (52) de la peau de pare-chocs (19), de sorte que ledit bord (52) peut coulisser dans la gouttière (50) en fonction de mouvements relatifs d'ajustement de la peau de pare-chocs (19), de l'aile (5) et/ou du bloc optique (21).

4. Ensemble de bloc avant suivant l'une quelconque des revendications 1 à 3, **caractérisé en ce que** chaque poutre (43) présente une extrémité (43A) fixée rigidement à la partie centrale de face avant (9), l'autre extrémité (43B) étant libre, de façon que la poutre (43) soit susceptible de débattement par rapport à l'extrémité (43A) de fixation rigide.

5. Ensemble de bloc avant suivant la revendication 4, **caractérisé en ce que** chaque bloc optique (21) est fixé rigidement à l'extrémité (43A) de fixation rigide de la poutre (43), en un point de fixation, définissant un point de fixation simple (39, 47).

6. Ensemble de bloc avant suivant la revendication 5, dans lequel chaque bloc optique (21) comporte un boîtier (30) et une glace (31) solidaires, **caractérisé en ce que** le point de fixation simple (39, 47) est obtenu par un organe de fixation (39) solidaire du boîtier (30) et un organe de fixation complémentaire (47) solidaire de l'extrémité (43A) de fixation rigide de la poutre.

7. Ensemble de bloc avant suivant l'une quelconque des revendications 1 à 6, **caractérisé en ce que** la poutre (43) comporté un organe élastique d'accrochage (54), complémentaire d'un organe d'accrochage (67) solidaire de la partie avant d'aile (5) respective de façon à exercer un effort de précontrainte sur l'aile (5), en un point situé à distance du point de fixation de référence (60), ledit effort étant dirigé sensiblement d'avant en arrière suivant la direction générale de l'aile (5).

8. Ensemble de bloc avant suivant l'une quelconque des revendications 1 à 7, **caractérisé en ce que** chaque bloc optique (21) et la partie avant d'aile (5) respective sont fixés rigidement à la face avant en un même point de fixation, définissant un point de fixation double (41, 75).

9. Ensemble de bloc avant suivant la revendication 8, dans lequel chaque bloc optique (21) comporte un boîtier (30) et une glace (31) solidaires, **caractérisé en ce que** ledit point de fixation double (41, 75) est obtenu par un organe de fixation (41) solidaire du boîtier (30) et des organes de fixation complémentaires (75) de la partie avant d'aile (5) respective et de la face avant (7).

10. Ensemble de bloc avant suivant l'une quelconque des revendications 1 à 9, **caractérisé en ce que** chaque bloc optique (21) comporte au moins un organe d'indexage (33, 35) adapté pour coopérer avec un organe d'indexage complémentaire (68, 70) solidaire de la partie avant d'aile (5) correspondante.

11. Ensemble de bloc avant suivant la revendication 10, **caractérisé en ce que** ledit au moins un organe d'indexage est un pion (33, 35) tandis que l'organe d'indexage complémentaire est une gorge (68, 70) formée dans la partie avant d'aile (5) correspondante.

12. Ensemble de bloc avant suivant les revendications 10 ou 11, **caractérisé en ce que** chaque bloc optique (21) comporte deux tels organes d'indexage (33, 35).

13. Ensemble de bloc avant suivant l'une quelconque des revendications 10 à 12, **caractérisé en ce qu'**un premier organe d'indexage (33) et l'organe complémentaire (68) sont de forme adaptée pour autoriser un jeu relatif entre le bloc optique (21) et l'aile (5) suivant un axe sensiblement vertical.

14. Ensemble de bloc avant suivant l'une quelconque des revendications 10 à 13, **caractérisé en ce qu'**un deuxième organe d'indexage (35) et l'organe complémentaire (70) sont de forme adaptée pour autoriser un jeu relatif entre le bloc optique (21) et l'aile correspondante (5) suivant un axe dirigé sensiblement suivant la direction générale de l'aile (5).

15. Ensemble de bloc avant suivant l'une quelconque des revendications 1 à 14 , dans lequel chaque bloc optique (21) comporte un boîtier (30) et une glace (31) solidaires, **caractérisé en ce qu'**au moins un organe d'indexage (33, 35) est solidaire de la glace (31).

16. Ensemble de bloc avant suivant l'une quelconque des revendications 1 à 15, dans lequel chaque bloc optique (21) comporte un boîtier (30) et une glace (31) solidaires, **caractérisé en ce que** le point de fixation de référence (60) est obtenu par un organe de fixation (37) solidaire de la glace (31) et des organes de fixation complémentaires (60, 73) prévus sur la partie avant d'aile et la poutre (43) respectives.

17. Véhicule automobile comportant un ensemble de bloc avant selon l'une quelconque des revendications 1 à 16.

## Patentansprüche

1. Fronteinheit für Kraftfahrzeuge, mit einer Frontseite (7), die ein Mittelteil (9) und zwei Seitenteile (11) aufweist, einen Stoßfänger (17), eine Stoßfängerhaut (19), die eine Verkleidung des Stoßfängers bildet, zwei Träger (43), wovon sich jeder vom Mittelteil (9), an dem er befestigt ist, zu einem jeweiligen Seitenteil (11) erstreckt und Stützeinrichtungen für die Stoßfängerhaut (19) bilden, und zwei Scheinwerfereinheiten (21), wovon jede von einem jeweiligen Seitenteil (11) getragen ist und ein seitliches Umfangsteil aufweist, das dazu ausgelegt ist, mit einer komplementären Ausnehmung (25) eines jeweiligen vorderen Kotflügelteils (5) zusammenzuwirken,
**dadurch gekennzeichnet, dass**
jede Scheinwerfereinheit (21) und das jeweilige vordere Kotflügelteil (5) starr am entsprechenden Träger (43) an einem gleichen Bezugsbefestigungspunkt (60) befestigt sind, wobei der Träger (43) mit einer Elastizität ausgestattet ist, die wesentlich höher als diejenige der Frontseite (7) ist, so dass er sich in Abhängigkeit von relativen Einstellbewegungen der Stoßfängerhaut (19), des Kotflügels (5) und/oder der Scheinwerfereinheit (21) elastisch verformen kann.

2. Fronteinheit nach Anspruch 1,
**dadurch gekennzeichnet, dass**
die Stoßfängerhaut (19) starr an jedem Träger (43) an mindestens einem Punkt befestigt ist, der vom Bezugsbefestigungspunkt (60) gebildet ist.

3. Fronteinheit nach Anspruch 1 oder 2,
**dadurch gekennzeichnet, dass**
jeder Träger (43) eine Querrinne (50) umfasst, die einen komplementären Seitenrand (52) der Stoßfängerhaut (19) aufnimmt, so dass der Rand (52) in Abhängigkeit von relativen Einstellbewegungen der Stoßfängerhaut (19), des Kotflügels (5) und/oder der Scheinwerfereinheit (21) in der Rinne (50) gleiten kann.

4. Fronteinheit nach einem der Ansprüche 1 bis 3,
**dadurch gekennzeichnet, dass**
jeder Träger (43) ein Ende (43A) umfasst, das starr am Mittelteil der Frontseite (9) befestigt ist, wobei das andere Ende (43B) frei ist, damit der Träger (43) bezüglich des Endes (43A) zur starren Befestigung durchfedern kann.

5. Fronteinheit nach Anspruch 4,
**dadurch gekennzeichnet, dass**
jede Scheinwerfereinheit (21) starr am Ende (43A) zur starren Befestigung des Trägers (43) an einem Befestigungspunkt befestigt ist, der einen einfachen Befestigungspunkt (39, 47) bildet.

6. Fronteinheit nach Anspruch 5,
wobei jede Scheinwerfereinheit (21) ein Gehäuse (30) und ein Spiegelglas (31) umfasst, die aus einem Stück bestehen,
**dadurch gekennzeichnet, dass**
der einfache Befestigungspunkt (39, 47) durch ein mit dem Gehäuse (30) einstückig ausgebildetes Befestigungsteil (39) und ein mit dem Ende (43A) zur starren Befestigung des Trägers einstückig ausgebildetes komplementäres Befestigungsteil (47) erzielt wird.

7. Fronteinheit nach einem der Ansprüche 1 bis 6,
**dadurch gekennzeichnet, dass**
der Träger (43) ein elastisches Einhakteil (54) umfasst, das zu einem mit dem jeweiligen vorderen Kotflügelteil (5) einstückig ausgebildeten Einhakteil (67) komplementär ist, so dass eine Vorspannungskraft auf den Kotflügel (5) an einem vom Bezugsbefestigungspunkt (60) beabstandeten Punkt ausgeübt wird, wobei die Kraft im Wesentlichen entlang der allgemeinen Richtung des Kotflügels (5) von vorn nach hinten gerichtet ist.

8. Fronteinheit nach einem der Ansprüche 1 bis 7,
**dadurch gekennzeichnet, dass**
jede Scheinwerfereinheit (21) und das jeweilige vordere Kotflügelteil (5) starr an der Frontseite an einem gleichen Befestigungspunkt befestigt sind, der einen doppelten Befestigungspunkt (41, 75) bildet.

9. Fronteinheit nach Anspruch 8,
wobei jede Scheinwerfereinheit (21) ein Gehäuse (30) und ein Spiegelglas (31) umfasst, die aus einem Stück bestehen,
**dadurch gekennzeichnet, dass**
der doppelte Befestigungspunkt (41, 75) durch ein einstückig mit dem Gehäuse (30) ausgebildetes Befestigungsteil (41) und komplementäre Befestigungsteile (75) des jeweiligen vorderen Kotflügelteils (5) und der Frontseite (7) erzielt wird.

10. Fronteinheit nach einem der Ansprüche 1 bis 9,
**dadurch gekennzeichnet, dass**
jede Scheinwerfereinheit (21) mindestens ein Positionierungsteil (33, 35) umfasst, das dazu ausgelegt ist, mit einem komplementären Positionierungsteil (68, 70) zusammenzuwirken, das einstückig mit dem entsprechenden vorderen Kotflügelteil (5) ausgebildet ist.

11. Fronteinheit nach Anspruch 10,
**dadurch gekennzeichnet, dass**
das mindestens eine Positionierungsteil ein Zapfen (33, 35) ist, während das komplementäre Positionierungsteil eine Auskehlung (68, 70) ist, die im entsprechenden vorderen Kotflügelteil (5) ausgebildet ist.

12. Fronteinheit nach Anspruch 10 oder 11,
**dadurch gekennzeichnet, dass**
jede Scheinwerfereinheit (21) zwei solche Positionierungsteile (33, 35) umfasst.

13. Fronteinheit nach einem der Ansprüche 10 bis 12,
**dadurch gekennzeichnet, dass**
ein erstes Positionierungsteil (33) und das komplementäre Teil (68) eine angepasste Form haben, um ein relatives Spiel zwischen der Scheinwerfereinheit (21) und dem Kotflügel (5) entlang einer im Wesentlichen vertikalen Achse zuzulassen.

14. Fronteinheit nach einem der Ansprüche 10 bis 13,
**dadurch gekennzeichnet, dass**
ein zweites Positionierungsteil (35) und das komplementäre Teil (70) eine angepasste Form haben, um ein relatives Spiel zwischen der Scheinwerfereinheit (21) und dem entsprechenden Kotflügel (5) entlang einer Achse zuzulassen, die im Wesentlichen entlang der allgemeinen Richtung des Kotflügels (5) verläuft.

15. Fronteinheit nach einem der Ansprüche 1 bis 14,
wobei jede Scheinwerfereinheit (21) ein Gehäuse (30) und ein Spiegelglas (31) umfasst, die aus einem Stück bestehen,
**dadurch gekennzeichnet, dass**
mindestens ein Positionierungsteil (33, 35) einstückig mit dem Spiegelglas (31) ausgebildet ist.

16. Fronteinheit nach einem der Ansprüche 1 bis 15,
wobei jede Scheinwerfereinheit (21) ein Gehäuse (30) und ein Spiegelglas (31) umfasst, die aus einem Stück bestehen,
**dadurch gekennzeichnet, dass**
der Bezugsbefestigungspunkt (60) durch ein Befestigungsteil (37) erzielt wird, das mit dem Spiegelglas (31) und den komplementären Befestigungsteilen (60, 73) einstückig ausgebildet ist, die am jeweiligen vorderen Kotflügelteil und Träger (43) vorgesehen sind.

17. Kraftfahrzeug, das eine Fronteinheit nach einem der Ansprüche 1 bis 16 umfasst.

## Claims

1. Front unit assembly of a motor vehicle, comprising a front face (7) having a central section (9) and two lateral sections (11), a bumper (17), a bumper skin (19) forming the fairing of the said bumper, two beams (43), each extending from the central section (9) to which it is fixed towards a respective lateral section (11) and forming support members for the said bumper skin (19), and two optical units (21), each being supported by a respective lateral section (11) and having a lateral peripheral section adapted to cooperate with a complementary recess (25) in a respective front wing section (5), **characterised in that** each optical unit (21) and the respective front wing section (5) are fixed rigidly to the corresponding beam (43) at a same reference fixing point (60), the said beam (43) being endowed with an elasticity substantially greater than that of the front face (7), so that it is capable of elastic deformation as a function of relative adjustment movements of the bumper skin (19), the wing (5) and/or the optical unit (21).

2. Front unit assembly according to Claim 1, **characterised in that** the bumper skin (19) is fixed rigidly to each beam (43) at at least one point constituted by the said reference fixing point (60).

3. Front unit assembly according to Claim 1 or 2, **characterised in that** each beam (43) comprises a transverse channel (50) receiving a complementary lateral edge (52) of the bumper skin (19), so that the said edge (52) can slide in the channel (50) as a function of relative adjustment movements of the bumper skin (19), the wing (5) and/or the optical unit (21).

4. Front unit assembly according to any one of Claims 1 to 3, **characterised in that** each beam (43) has one end (43A) fixed rigidly to the central front face section (9), the other end (43B) being free, such that the beam (43) is capable of deflection relative to the rigid fixing end (43A).

5. Front unit assembly according to Claim 4, **characterised in that** each optical unit (21) is fixed rigidly to the rigid fixing end (43A) of the beam (43) at one fixing point, defining a single fixing point (39, 47).

6. Front unit assembly according to Claim 5, in which each optical unit (21) comprises an integral housing (30) and lens (31), **characterised in that** the single fixing point (39, 47) is obtained by a fixing member (39) integral with the housing (30) and a complementary fixing member (47) integral with the rigid fixing end (43A) of the beam.

7. Front unit assembly according to any one of Claims 1 to 6, **characterised in that** the beam (43) comprises an elastic hook-fastening member (54), complementary to a hook-fastening member (67) integral with the respective front wing section (5) such as to apply a prestressing force to the wing (5), at a point situated at a distance from the reference fixing point (60), the said force being directed substantially from front to rear in the general direction of the wing (5).

8. Front unit assembly according to any one of Claims 1 to 7, **characterised in that** each optical unit (21) and the respective front wing section (5) are fixed rigidly to the front face at a same fixing point, defining a double fixing point (41, 75).

9. Front unit assembly according to Claim 8, in which each optical unit (21) comprises an integral housing (30) and lens (31), **characterised in that** the said double fixing point (41, 75) is obtained by a fixing member (41) integral with the housing (30) and complementary fixing members (75) of the respective front wing section (5) and of the front face (7).

10. Front unit assembly according to any one of Claims 1 to 9, **characterised in that** each optical unit (21) comprises at least one indexing member (33, 35) adapted to cooperate with a complementary indexing member (68, 70) integral with the corresponding front wing section (5).

11. Front unit assembly according to Claim 10, **characterised in that** the said at least one indexing member is a pin (33, 35), whereas the complementary indexing member is a groove (68, 70) formed in the corresponding front wing section (5).

12. Front unit assembly according to Claims 10 or 11, **characterised in that** each optical unit (21) comprises two such indexing members (33, 35).

13. Front unit assembly according to any one of Claims 10 to 12, **characterised in that** a first indexing member (33) and the complementary member (68) are of a form adapted to allow relative play between the optical unit (21) and the wing (5) along a substantially vertical axis.

14. Front unit assembly according to any one of Claims 10 to 13, **characterised in that** a second indexing member (35) and the complementary member (70) are of a form adapted to allow relative play between the optical unit (21) and the corresponding wing (5) along an axis directed substantially in the general direction of the wing (5).

15. Front unit assembly according to any one of Claims 1 to 14, in which each optical unit (21) comprises an integral housing (30) and lens (31), **characterised in that** at least one indexing member (33, 35) is integral with the lens (31).

16. Front unit assembly according to any one of Claims 1 to 15, in which each optical unit (21) comprises an integral housing (30) and lens (31), **characterised in that** the reference fixing point (60) is obtained by a fixing member (37) integral with the lens (31) and complementary fixing members (60, 73) provided on the respective front wing section and the respective beam (43).

17. Motor vehicle comprising a front unit assembly according to any one of Claims 1 to 16.
